# EUROPÄISCHE PATENTSCHRIFT

(11) **EP 3 236 101 B1**
(45) Veröffentlichungstag und Bekanntmachung des Hinweises auf die Patenterteilung: **17.03.2021**
(21) Anmeldenummer: 16166127.7
(22) Anmeldetag: 20.04.2016
(51) Int. Cl.: F16D 67/04

(54) **KUPPLUNGSBAUGRUPPE**
COUPLING ASSEMBLY
ACCOUPLEMENT

(43) Veröffentlichungstag der Anmeldung: 25.10.2017
(73) Patentinhaber: Ortlinghaus-Werke GmbH, 42929 Wermelskirchen (DE)
(72) Erfinder: Langenbeck, Bernhard, 44267 Dortmund (DE); Albrecht, Markus, 40489 Düsseldorf (DE); Priedigkeit, Kai, 42499 Hückeswagen (DE)
(74) Vertreter: Rausch Wanischeck-Bergmann Brinkmann

(56) Entgegenhaltungen:
- EP-A1- 2 090 800
- EP-A2- 2 295 825
- WO-A1-96/01957
- DE-A1-102015 114 926
- US-A- 5 190 129

## Beschreibung

Die vorliegende Erfindung betrifft eine Betriebsbaugruppe zur mechanischen Verbindung einer Kraftmaschine mit einer Arbeitsmaschine. Derartige Betriebsbaugruppen sind im Stand der Technik hinreichend bekannt. An einer Antriebswelleneinheit wird üblicherweise eine Kraftmaschine angeschlossen, an einer Abtriebswelleneinheit eine Arbeitsmaschine. Es ist bekannt, zwischen Antriebswelleneinheit und Abtriebswelleneinheit z. B. hydraulisch betätigte Lamellenkupplungen einzusetzen. Da es bekannt ist, dass unter Umständen Lamellenkupplungen je nach Gerätebetriebszustand auch unerwünschte Schleppmomente übertragen - dies ist insbesondere bei ölgeschmierten Lamellenkupplungen der Fall -, wird gegebenenfalls im Bereich einer Abtriebswelleneinheit oder Abtriebswelle eine Haltebremse eingesetzt, um die Arbeitsmaschine endgültig festzusetzen.

Derartige Einheiten sind in unterschiedlichen Anwendungen im Einsatz, beispielsweise in maritimen Anwendungen zwischen Dieselaggregat und Propelleranlage, aber auch bei Stromgeneratoreinheiten und dergleichen. Ein Beispiel ist in das Dokument DE10 2015 114926 A1 gezeigt.

Lamellenkupplungen sind ebenfalls an sich bekannte Baugruppen, bei welchen mit einer Antriebswelle direkt oder indirekt verbundene Lamellenscheiben gegenüber gehäuseseitig festgesetzten Lamellen rotieren. Diese Lamellenpakete sind entgegen Federkraft oder sonstige Vorspannung beispielweise mittels Hydraulikkraft in axialer Richtung bewegbar, so dass der Abstand zwischen den drehenden und den feststehenden Lamellen variierbar ist. Bei Vollkontakt erfolgt eine Leistungsübertragung (Drehzahl x Drehmoment), bei vollständiger Ablösung in einer ausreichenden Abstand bietenden Endposition sind Antrieb und Abtrieb voneinander getrennt. Zwischenstufen sind mit herkömmlichen Anlagen durch entsprechende Kontrolle des Druckmediums ansteuerbar.

Sobald ein Antrieb startet und eine Antriebswelle rotieren lässt, wird die Antriebswelle der Kupplungseinheit in Rotation versetzt. Durch entsprechende Druckbeaufschlagung mittels Druckmedium z. B. Drucköl wird die Lamellenkupplung eingerückt und somit eine entsprechende Übertragung der Rotation ermöglicht.

Es ist bekannt, dass alleine durch Druckvariation am Kupplungskolben eine im Wesentlichen stufenlose Drehzahlanpassung der Abtriebsseite gegenüber der Antriebsdrehzahl erfolgen kann, ohne selbst die Antriebsdrehzahl zu beeinflussen. Selbstredend sind Nebenaggregate zur Bereitstellung von Schmieröl, Kühlölmedium und dergleichen vorhanden.

Es ist bekannt, dass diese Drehzahlanpassung in Bereichen niedriger Drehzahlen bei Verbrennungsmotoren eine Grenze hat. Üblicherweise sind Drehzahlen unterhalb der Motorleerlaufdrehzahlen nicht möglich. Mit Hilfe einer einstellbaren Lamellenkupplung besteht jedoch die Möglichkeit, diese mit geringem Betätigungsdruck zu betreiben, wobei man von einer "rutschenden Kupplung" spricht. In diesem Betriebszustand herrscht kein Synchronlauf zwischen An- und Abtriebsseite vor Dies erfolgt beispielsweise, wenn die Kraftmaschine aus anderen Gründen in einem entsprechend hohen Drehzahlbereich betrieben werden muss. Solche Gründe können die Leistungsbereitstellung für Sicherheitsvorrichtungen zur Feuerbekämpfung und dergleichen sein.

Das Rutschen der Kupplungen erzeugt eine Verlustleistung.

Der Kühlleistung kommt eine entsprechend große Bedeutung zu. Die entstehende Verlustleistung im Rutschbetrieb wird über die intern zugeführte Ölmenge aus der Kupplung abgeführt. Dieser Energieeintrag muss über einen Kühler aus dem System wieder abgeführt werden. Dies passiert üblicherweise über einen Wasser-Öl-Wärmetauscher. Neben der Menge des zugeführten Kühlmediums und der Eintrittstemperatur des Kühlmediums ist die kupplungsseitig zur Verfügung gestellte Ölmenge entsprechend entscheidend. Zur Dissipation hoher Verlustleistungen sind große Ölmengen erforderlich. Da im praktischen Betrieb der Einheiten allerdings nicht vorherbestimmbar ist, wann die maximale Verlustleistung auftreten wird, muss eine entsprechend große Kühlölmenge anstehen. Diese große Ölmenge führt jedoch bei geöffneter Kupplung dazu, dass hohe Schleppmomente entstehen, die auf der Abtriebsseite bereits zu entsprechend hohen Drehzahlen führen können. Diese Drehzahlen sind in der Regel aber bei offener Kupplung nicht erwünscht. Ziel wäre die stufenlose Drehzahleinstellung bis Null.

Eine mögliche Abhilfe ist eine Haltebremse, mit welcher die Abtriebsseite endgültig festgesetzt wird. Es verbleibt aber ein unkontrollierbarer Drehzahlbereich.

Ausgehend vom beschriebenen Stand der Technik liegt der vorliegenden Erfindung die **AUFGABE** zugrunde, eine Betriebsbaugruppe der gattungsgemäßen Art bereitzustellen, mit welcher größere Drehzahlbereiche insbesondere niedriger Drehzahlen eindeutig kontrollierbar sind. Darüber hinaus soll mit der Erfindung ein Verfahren zum Betrieb entsprechender Betriebsbaugruppen angegeben werden.

Zur technischen **LÖSUNG** dieser Aufgabe wird eine Betriebsbaugruppe mit den Merkmalen des Patentanspruches 1 vorgeschlagen. Weitere Vorteile und Merkmale ergeben sich aus den Unteransprüchen.

Ein Vorschlag für ein erfindungsgemäßes Verfahren ergibt sich aus den Merkmalen des Anspruches 7. Weitere Vorteile und Merkmale ergeben sich aus den Unteransprüchen.

Erfindungsgemäß ist vorgesehen, eine dynamisch ansteuerbare Bremse als Haltebremse einzusetzen. Durch diese Maßnahme kann die Haltebremse dynamisch angesteuert werden und es kann ein bedarfsgerechtes Bremsmoment eingestellt werden.

Sowohl die Kupplungen als auch die Bremsen können mit unterschiedlichen Medien betätigt werden. Generell spricht man von Hilfsenergie. Wenn im Rahmen der vorliegenden Anmeldung beispielhaft von Hydraulik, Steuerung des Hydraulikdruckes, hydraulischer Kupplung, hydraulischer Bremse und dergleichen gesprochen wird, so ist dies nicht beschränkend. Umfasst sind auch alle anderen möglichen Hilfsenergien, mit welchen entsprechende Kupplungen und Bremsen betätigbar sind.

Insofern können durch gleichzeitige Kontrolle des Hydraulikdruckes an der Lamellenkupplung einerseits und des Hydraulikdruckes an der Haltebremse andererseits Schleppmomente in der Lamellenkupplung kompensiert werden.

Durch die erfindungsgemäße Betriebsbaugruppe ist es möglich, die Abtriebsdrehzahl nahezu zwischen 0 und 100 % der Antriebsdrehzahl einzuregeln und zu kontrollieren.

Gemäß einem vorteilhaften Vorschlag der Erfindung können die Lamellenkupplung und die Haltebremse in einem Gehäuse integriert sein. Durch diesen Vorschlag kann eine besonders kompakte Einheit erstellt werden, die in einer Wellenleitung, die unter anderem Gelenkwellen aufweisen kann, einsetzbar ist. Eine entsprechende Betriebsbaugruppe kann Nebenantriebe aufweisen, die gemäß einem weiteren Vorschlag der Erfindung für eine Hydraulikversorgung der erforderlichen Leistungsströme, Schmiermittelströme und/oder Kühlölströme einsetzbar sind. Derartige Nebenantriebe können beispielsweise mit der Antriebswelleneinheit verbunden sein.

Gemäß der Erfindung weist die Betriebsbaugruppe eine Steuereinheit auf. Diese ist so ausgelegt, dass sie eine Einheit zur stufenlosen Regelung des Hydraulikdruckes an der Lamellenkupplung umfasst, so dass die Lamellenkupplung zwischen voller Leistungsübertragung einerseits und vollständiger Trennung andererseits einstellbar ist. Weiterhin umfasst die Steuereinheit eine Einheit zur Einstellung des Hydraulikdruckes an der Haltebremse, so dass diese zwischen Freilauf und Fixierung einstellbar ist.

Durch die erfindungsgemäße Lösung wird eine Betriebsbaugruppe bereitgestellt, die in einfacher Weise aufbaubar und einsetzbar ist. Gemäß einem vorteilhaften Vorschlag der Erfindung wird diese beispielsweise für einen Marinepropulsionsantrieb zwischen Dieselmaschine und Propeller eingesetzt. Die Verwendung der erfindungsgemäßen Vorrichtung kann durch Druckvariation am Bremskolben das Schleppmoment von der Kupplung soweit kompensieren, dass die Abtriebsdrehzahl auf den vom Betreiber gewünschten Wert eingestellt werden kann. Ist das Schleppmoment zu gering, wird die Bremse komplett geöffnet und die schlupfende Kupplung kann die Abtriebsdrehzahl wie gewohnt auf den gewünschten Wert anheben. Die Drehzahlregelung erfolgt über den Drehzahlabgleich zwischen An- und Abtriebsdrehzahl und der damit verbundenen Druckanpassung mittels beispielsweise Proportionalventilen. Mit der Erfindung ist es auch möglich, die Bremse mit einem festen Druck zu beaufschlagen, und zwar im Bereich langsamer Abtriebsdrehzahlen, welcher so hoch ist, dass das maximal auftretende Schleppmoment komplett kompensiert wird. Bei Ausfall der Druckerzeugung kann die Haltebremse mittels Vorrichtung manuell eingerückt werden.

Verfahrensseitig wird mit der Erfindung vorgeschlagen, sowohl den Druck an der Lamellenkupplung als auch den Druck an der Haltebremse einzustellen bzw. zu regeln. Hierzu ist der Einsatz einer ansteuerbaren hydraulischen Bremse erforderlich, wie dies von der Erfindung vorgeschlagen wird. Auf diese Weise kann erfindungsgemäß ein an der Lamellenkupplung auftretendes Schleppmoment durch die Regelung des an der Haltebremse anliegenden Hydraulikdruckes kontrolliert werden. Die Regelung ermöglicht also eine Abtriebsdrehzahl völlig unabhängig von der Drehzahl der Kraftmaschine vorzunehmen. Dabei ist natürlich selbstverständlich, dass die Kraftmaschine eine entsprechend höhere Drehzahl bereitstellt.

Erfindungsgemäß ist vorgesehen, dass die Kraftmaschine mi einer Mindestdrehzahl betrieben wird. Auf diese Weise können Notfunktionen versorgt werden, beispielsweise der Notbetrieb von Sicherheitsanlagen, oder auch Betriebszustände beispielsweise eines Schiffes, unter anderem Position im Gegenstrom halten, Langsamfahrt im Hafenbereich, Feuerlöschpumpen betreiben und den Rückstoß ausgleichen und dergleichen.

Gemäß der Erfindung werden also Kupplung und Bremse beide angesteuert. Dies setzt voraus, dass erfindungsgemäß eine dynamisch ansteuerbare Bremse eingesetzt wird. Die Vorrichtung umfasst also eine Kupplung und eine Bremse, die beide dynamisch derart ansteuerbar sind, dass selbst bei niedrigen Drehzahlen eine kontrollierbare Abtriebsdrehzahl eingestellt und aufrecht erhalten werden kann.

Weitere Vorteile und Merkmale der Erfindung ergeben sich aus der folgenden Beschreibung anhand der Figuren. Dabei zeigen:
- Fig. 1: eine geschnittene Prinzipdarstellung einer erfindungsgemäßen Betriebsbaugruppe;
- Fig.2: eine schematische Darstellung der Funktionsgruppen und der Regelungsvorgänge und
- Fig. 3: eine perspektivische Darstellung einer Anwendung einer erfindungsgemäßen Betriebsbaugruppe in einem Marinepropulsionsantrieb.

In den Figuren sind gleiche Elemente mit gleichen Bezugszeichen versehen.

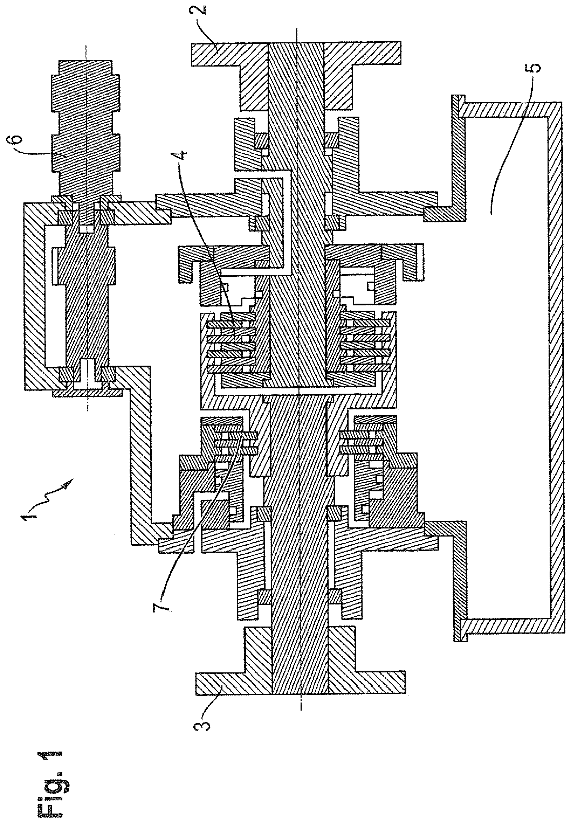

Wie in Figur 1 gezeigt ist, besteht das Ausführungsbeispiel aus einer integrierten Baugruppe, bei welcher eine Antriebswelleneinheit 2 über eine Lamellenkupplung 4 und einer Haltebremse 7 auf einer Abtriebsweileneinheit 3 durchgeführt ist. Hydrauliköl wird aus einem Ölsumpf 5 bereitgestellt, der beispielsweise über eine angeschlossene Pumpe 6 gefördert wird.

Bei der Haltebremse 7 handelt es sich ebenso wie bei der Lamellenkupplung 4 um eine dynamisch ansteuerbare Baugruppe.

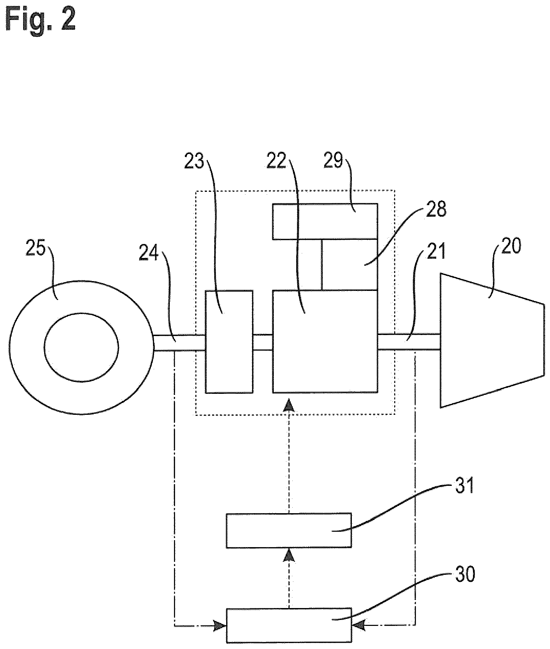

Gemäß Figur 2 wird die Drehzahl einer Antriebswelle 21, die von einer Kraftmaschine 20 angetrieben wird und einer Abtriebswelle 24, die auf einer Arbeitsmaschine 25 überträgt, verglichen. Je nach Sollvorgabe sorgt die Steuereinheit (nicht gezeigt) dafür, dass ein entsprechendes Drehmoment eingestellt wird, was mit 31 angedeutet ist. Es erfolgt also eine entsprechende Druckzuführung auf die Lamellenkupplung 22 einerseits und unabhängig davon auf die Haltebremse 23, wenn hierfür Bedarf besteht.

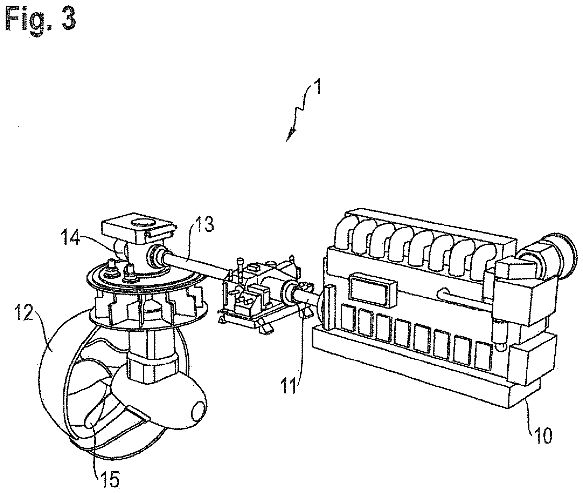

Figur 3 zeigt beispielhaft einen Einsatzfall, wobei ein Schiffsdiesel 10 seine Leistung auf die Antriebswelle 11 gibt. Die Betriebsgruppeneinheit 1 übertragt Leistung bedarfsgerecht auf die Abtriebswelle 13. Über ein Getriebe 14 wird ein Propeller 15 einer Propellergruppe 12 entsprechend angetrieben.

**Bezugszeichen**

| | | | |
|---|---|---|---|
| 1 | Betriebsbaugruppe | 23 | Bremse |
| 2 | Antriebswelleneinheit | 24 | Abtriebswelle |
| 3 | Abtriebswelleneinheit | 25 | Arbeitsmaschine |
| 4 | Lamellenkupplung | 28 | Nebenantrieb |
| 5 | Ölsumpf | 29 | Nebenaggregat |
| 6 | Pumpe | 30 | Drehzahlvergleich |
| 7 | Haltebremse | 31 | Drucksteuerung |
| 10 | Schiffsdiesel | | |
| 11 | Antriebswelle | | |
| 12 | Propellerbaugruppe | | |
| 13 | Abtriebswelle | | |
| 14 | Getriebe | | |
| 15 | Propeller | | |
| 20 | Kraftmaschine | | |
| 21 | Antriebswelle | | |
| 22 | Kupplung | | |

## Patentansprüche

1. Betriebsbaugruppe zur mechanischen Verbindung einer Kraftmaschine (20) mit einer Arbeitsmaschine (25), mit einer Antriebswelleneinheit (2) und einer Abtriebswelleneinheit (3), welche mittels einer dynamisch ansteuerbaren Lamellenkupplung (4) verbunden sind, wobei die Lamellenkupplung (4) in einem Betriebszustand betreibbar ist, in dem zwischen An- und Abtriebsseite kein Synchronlauf vorherrscht, und mit einer auf die Abtriebswelleneinheit (3) wirkenden Haltebremse (7) sowie einer Steuereinheit, **dadurch gekennzeichnet, dass** die Haltebremse (7) eine dynamisch ansteuerbare Bremse ist.

2. Betriebsbaugruppe nach Anspruch 1, **dadurch gekennzeichnet, dass** die Lamellenkupplung (4) und die Haltebremse (7) in einem gemeinsamen Gehäuse integriert sind.

3. Betriebsbaugruppe nach einem der vorhergehenden Ansprüche, **dadurch gekennzeichnet, dass** diese Nebenantriebe (28) aufweist.

4. Betriebsbaugruppe nach Anspruch 3, **dadurch gekennzeichnet, dass** über die Nebenantriebe (28) Pumpen für eine Hydraulikversorgung der erforderlichen Leistungs-, Schmier- und/oder Kühlölströme antreibbar sind.

5. Betriebsbaugruppe nach einem der vorhergehenden Ansprüche, **dadurch gekennzeichnet, dass** diese eine elektrisch betriebene Pumpe aufweist.

6. Betriebsbaugruppe nach einem der vorhergehenden Ansprüche, **dadurch gekennzeichnet, dass** die Steuereinheit eine Einheit zur stufenlosen Regelung des Hydraulikdruckes an der Lamellenkupplung (4) zwischen Trennung und voller Leistungsübertragung sowie eine Einheit zur stufenlosen Einstellung des Hydraulikdruckes an der Haltebremse (7) zwischen Freilauf und Fixierung umfasst.

7. Verfahren zum Betrieb einer Betriebsbaugruppe nach wenigstens einem der Ansprüche 1 bis 6, **dadurch gekennzeichnet, dass** die Abtriebsdrehzahl durch eine Ansteuerung sowohl der Lamellenkupplung (4) als auch der Haltebremse (7) geregelt wird.

8. Verfahren nach Anspruch 7, **dadurch gekennzeichnet, dass** an der Lamellenkupplung (4) auftretende Schleppmomente durch Ansteuerung der Haltebremse (7) kompensiert werden.

9. Verfahren nach einem der vorhergehenden Ansprüche 7 oder 8, **dadurch gekennzeichnet, dass** die Regelung der Abtriebsdrehzahl unabhängig von der Drehzahl der Kraftmaschine (20) erfolgt.

10. Verfahren nach einem der vorhergehenden Ansprüche 7 bis 9, **dadurch gekennzeichnet, dass** die Regelung unter Aufrechterhaltung einer Mindestdrehzahl der Kraftmaschine (20) erfolgt.

## Claims

1. An operational assembly for the mechanical connection of a prime mover (20) with a work machine (25), comprising a driving shaft unit (2) and an output shaft unit (3), which are connected to each other by means of a dynamically controllable multi-disc-clutch (4), wherein the multiple-disc-clutch can be operated in an operating state, in which no synchronous run prevails between the driving side and the output side, and comprising a holding brake (7), which acts upon the output shaft unit (3), as well as a control unit, **characterized in that** the holding brake (7) is a dynamically controllable brake.

2. An operational assembly according to claim 1, **characterized in that** the multiple-disc-clutch (4) and the holding brake (7) are integrated in a common housing.

3. An operational assembly according to one of the preceding claims, **characterized in that** this one comprises auxiliary drives (28).

4. An operational assembly according to claim 3, **characterized in that** pumps for a hydraulic supply of the required power, lubricating and/or cooling oil flows can be driven by means of the auxiliary drives (28).

5. An operational assembly according to one of the preceding claims, **characterized in that** this one comprises an electrically operated pump.

6. An operational assembly according to one of the preceding claims, **characterized in that** the control unit comprises a unit for the continuous regulation of the hydraulic pressure at the multiple-disc-clutch (4) between separation and full power transfer as well as a unit for the continuous adjustment of the hydraulic pressure at the holding brake (7) between freewheel and fixation.

7. A method for operating an operational assembly according to at least one of the claims 1 through 6, **characterized in that** the output speed is regulated by controlling both the multiple-disc-clutch (4) and the holding brake (4).

8. A method according to claim 7, **characterized in that** drag torques, which occur at the multiple-disc-clutch (4) are compensated by controlling the holding brake (7).

9. A method according to one of the preceding claims 7 or 8, **characterized in that** the output speed is regulated independently from the speed of the prime mover (20).

10. A method according to one of the preceding claims 7 through 9, **characterized in that** the regulation is realized while maintaining a minimum speed of the prime mover (20).

## Revendications

1. Assemblage de fonctionnement pour relier mécaniquement un moteur premier (20) à une machine de travail (25), comprenant une unité d'arbre d'entraînement (2) et une unité d'arbre entraîné (3), qui sont reliées l'une à l'autre par moyen d'un embrayage multidisque (4) à commande dynamique, dans lequel on peut faire fonctionner l'embrayage multidisque (4) dans un état de fonctionnement, dans lequel aucun fonctionnement synchrone ne prévaut entre le côté d'entraînement et le côté entraîné, et comprenant un frein de maintien (7), qui agit sur l'unité d'arbre entraîné (3), ainsi qu'une unité de commande, **caractérisé en ce que** le frein de maintien (7) est un frein à commande dynamique.

2. Assemblage de fonctionnement selon la revendication 1, **caractérisé en ce que** l'embrayage multidisque (4) et le frein de maintien (7) sont intégrés dans un boîtier commun.

3. Assemblage de fonctionnement selon l'une des revendications précédentes, **caractérisé en ce que** celui-ci comprend des entraînements auxiliaires (28).

4. Assemblage de fonctionnement selon la revendication 3, **caractérisé en ce que** des pompes pour une alimentation hydraulique en courants d'huiles de puissance, de lubrification et/ou de refroidissement nécessaires peuvent être entraînés par les entraînements auxiliaires (28).

5. Assemblage de fonctionnement selon l'une des revendications précédentes, **caractérisé en ce que** celui-ci comprend une pompe électriquement propulsé.

6. Assemblage de fonctionnement selon l'une des revendications précédentes, **caractérisé en ce que** l'unité de commande comprend une unité pour régler en continu la pression hydraulique de l'embrayage multidisque (4) entre une séparation et un transfert de puissance complet ainsi qu'une unité pour ajuster la pression hydraulique du frein de maintien (7) entre le roulement libre et la fixation.

7. Procédé de fonctionnement d'un assemblage de fonctionnement selon au moins l'un des revendications 1 à 6, **caractérisé en ce que** la vitesse de sortie est réglée par une commande de l'embrayage multidisque (4) ainsi que du frein de maintien (7).

8. Procédé selon la revendication 7, **caractérisé en ce que** des couples de traînée, qui se produisent à l'embrayage multidisque (4), sont compensés par une commande du frein de maintien (7).

9. Procédé selon l'une des revendications précédentes 7 ou 8, **caractérisé en ce que** la régulation de la vitesse de sortie se fait indépendamment de la vitesse du moteur primeur (20).

10. Procédé selon l'une des revendications précédentes 7 à 9, **caractérisé en ce que** la régulation se fait en maintenant une vitesse minimum du moteur primeur (20).
